Europäisches Patentamt

European Patent Office

Office européen des brevets

(11) Publication number: **0 140 862**
**B1**

## EUROPEAN PATENT SPECIFICATION

(45) Date of publication of patent specification: 26.04.89

(51) Int. Cl.⁴: **B 60 T 8/64**

(21) Application number: **84850332.2**

(22) Date of filing: **29.10.84**

(54) Braking force modulator.

(30) Priority: **31.10.83 SE 8305977**

(43) Date of publication of application:
**08.05.85 Bulletin 85/19**

(45) Publication of the grant of the patent:
**26.04.89 Bulletin 89/17**

(84) Designated Contracting States:
**BE DE FR GB IT NL SE**

(56) References cited:
**CH-A- 353 627
CH-A- 360 591
CH-A- 597 023
SE-A- 369 760
US-A-1 488 528
US-A-3 067 728
US-A-4 278 300**

(73) Proprietor: **Blomberg, Folke Ivar
Duvstigen 4
S-181 40 Lidingö (SE)**
(73) Proprietor: **Holst, Jan-Olov Martin
Skogsduvevägen 14
S-752 52 Uppsala (SE)**

(72) Inventor: **Blomberg, Folke Ivar
Duvstigen 4
S-181 40 Lidingö (SE)**
Inventor: **Holst, Jan-Olov Martin
Skogsduvevägen 14
S-752 52 Uppsala (SE)**

(74) Representative: **Bjellman, Lennart Olov Henrik
et al
DR. LUDWIG BRANN PATENTBYRA AB
Drottninggatan 7 Box 1344
S-751 43 Uppsala (SE)**

Courier Press, Leamington Spa, England.

## Description

The present invention relates to a braking force modulator which together with suitable devices for sensing the state of rotation of the wheels of a vehicle forms a complete system for preventing wheels from becoming locked when brakes are applied on vehicles provided with pneumatic brakes beyond the limit corresponding to the actual state of friction existing at a certain moment between the vehicle wheel and the road surface.

In such complete so-called "anti-lock" or "anti-skid" systems the basic function is such that when the system (wheel sensor) supervising the state of rotation of the vehicle wheel during braking detects that the wheel tends to be retarded beyond a certain limit, the wheel sensor transmits an order to the braking force modulator to prevent additional accumulation of braking force and also to reduce already applied braking force. Then the retardation of the vehicle wheel is reduced and transformed into an acceleration. When the vehicle wheel has reached a speed approaching the speed of a non-braked wheel at the actual vehicle speed, the wheel sensor takes a new decision which may involve an order to the braking force modulator again to increase the braking force or to hold it at a constant level.

As the present invention only refers to a braking force modulator, there is no reason here to deal in detail with wheel sensors which are available in many well-known constructions, both mechanical and electronic, representing various control philosophies. Some of these sensors produce only two orders, viz. to prevent additional braking force accumulation and reducing already applied braking force or again to increase the braking force but, as previously intimated, sensors are available which in addition to the above-mentioned two orders also produce an order to hold the braking force at a constant level.

It appears from the above explanations that an universally useful braking force modulator, i.e. a modulator which may be used in combination with any type of wheel sensors known so far, must fulfil the requirement to be able to receive and execute four orders, namely:

1. Bar additional accumulation of braking force.
2. Reduce already applied braking force.
3. Increase the braking force again.
4. Hold the braking force at a constant level.

Suitably each wheel provided with a brake, which may be a wheel on a pulling vehicle or a wheel on an attached trailing car, forms a unit with the sensor and other equipment for preventing locking of the brake and with a device according to this invention, and the invention will hereafter be described by reference to a single wheel provided with a brake, an expert in the field realizing that other embodiments are possible. For example an embodiment may be mentioned in which the braking force on all the brakes on the same axle are controlled identically by a common equipment.

Lock-preventing systems are known for pneumatic brakes for vehicles where the sensor signals actuate various valve arrangements in which systems the compressed air used for normal brake application is discharged completely or partly whenever a sensor signal ordering the braking force to be reduced is produced. Thus, this means that whenever the lock-preventing system comes into action, compressed air is released into the environment. During a braking process controlled by such a system a series of such air discharges occurs with intervening supply of air from the compressor or air-supply tank of the vehicle. The compressor is required incessantly to provide compensation for these pressure releases and when the pressure releases are numerous and large during a comparatively short time the compressor will not be able completely to perform this compensation.

Thus the operation of such a system involves large consumption of compressed air and during repeated powerful braking on a slippery road this may cause the pressure of the pneumatic system to fall below the level at which the emergency or parking brakes will be actuated. Such systems are therefore provided with devices that cut off the anti-lock system when dangerously low pressures occur.

As air is compressible it will always take a certain time to build up a pressure and it also takes a certain time to release a pressure. The amount of available pressurized air is determined by the compressor and the tank, but it is not permissible, neither economically nor in respect to space, to dimension this equipment in agreement with the requirements which may be made thereon at some isolated occasions. Discharge and replenishment may be accelerated by increased valve areas but these may easily yield other problems such as bad sealing, long operation times, control difficulties and the like so that in practice lesser valve areas are still preferred and an acceptable function is attempted to be obtained under reasonable consumption of pressurized air by limiting the working frequency of the system.

Due to the problems discussed in the preceding paragraph such a conventional anti-lock system for pneumatic brakes exhibits a slow function, ordinarily a frequency between 1 and 2 Hz for the control cycles while at the same time the consumption of pressurized air is so large that the pressure thereof after 10 to 15 seconds has fallen below a useful value. The driver experiences the braking as jerky and it is not unusual that the drive is forced to compensate braking variations in the two front wheels by virtually steering against braking action which gives neither the impression nor the effect of a fully reliable braking system. In many vehicles this renders individual control of the forward wheel brakes impossible.

In Swedish Patent Specification SE-B-76 01997-5 (publication number 418 485) there is shown and described a device for preventing pneumatically braked vehicle wheels from locking during braking. The basic principle of this system consists in that upon receipt of a sensor signal a counterforce is applied to a mechanical link in the braking system for reducing the braking force. The counterforce is provided by a hydraulic system comprising a hydraulic cylinder producing the counterforce, a tank for the hydraulic fluid, a hydraulic pump driven by an electric motor, a valve which is normally open but which is shut-off due to a sensor signal and hydraulic conduits extending between these units. The hydraulic cylinder is continuously connected to the mechanical system actuating the brakes and thus moves every time braking is performed, thereby causing hydraulic fluid to be pressed from the cylinder into the hydraulic fluid tank when the brakes are applied and being sucked back from the hydraulic fluid tank into the hydraulic cylinder when the brake is released. The previously mentioned valve controlled by the sensor signal and inserted into the conduit to the hydraulic cylinder is open during normal braking and thus the system does not produce any opposing forces during normal movements of the braking mechanism. When during a brake application the sensor emits a shut-off signal to the valve, the hydraulic fluid flow from the hydraulic cylinder to the hydraulic fluid tank is interrupted whereby the brake application is blocked. If, in addition, the sensor emits an order to start the electric motor driving the hydraulic pump, hydraulic fluid is pumped from the hydraulic fluid pump to the hydraulic cylinder causing the brake to be released due to the fact that the force from the hydraulic cylinder overcomes the force from those elements in the conventional braking system which operate the brake. If the motor is stopped and the valve is opened the brake is again applied. It will be appreciated that by causing the sensor to emit various combinations of signals to the valve and the motor, the device according to Swedish Patent Specification SE-B-76 01997-5 (publication number 418 485) can be caused to perform all the four orders mentioned initially.

While the described device in many cases is satisfactory, it has shown that in particular in heavy vehicles where the braking forces are considerable, very powerful electric motors will be needed to drive the hydraulic pump. Starting power required often exceeds 1 kW as well as a mean power of 350 W during a braking sequence controlled by the system.

Apart from the fact that power consumption will be high in such modulators, also the modulator itself with its driving motor will be huge and clumsy and in addition expensive.

Studies of test results obtained during running of heavy vehicles provided with pneumatic brakes and anti-lock systems in which pressurized air is released, have shown that variations in the pressure of the pressurized air during a modulated braking sequence practically never exceeds 2 bar independent of the state of the road and the weight of the vehicle. A pressurized air system for vehicles normally holds a pressure of about 7 bar and the pressure variations during a modulated braking sequence may be between 7 and 5 bar when the road is good and the vehicle is fully loaded. Depending on the state of the road and the weight of the vehicle this value will go down and lie between 2 to 1.5 bar and sometimes still lower when the friction ratio between the vehicle wheel and the road surface is particularly low. All the time the difference will be about 1.5 to 2 bar and only in rare cases will it be higher.

The present invention makes use of the conditions explained in the preceding paragraph by causing under certain conditions a sensor signal, on the one hand, to interrupt a braking force accumulation in progress in the conventional braking system and, on the other hand, to release already applied braking force. Thereby it will be avoided that the braking force modulator at any time needs to produce counterforces corresponding to such brake application forces as the conventional braking system can produce at most.

The braking force modulator according to this invention can briefly be described as a device according to Swedish Patent Specification SE-B-76 01997-5 (publication number 418 485) which is complemented in some respects, the most important of which is a device which realizes the purposes intimated in the preceding paragraph.

The device comprises a unit which is inserted into the pressurized-air conduit between the braking cylinders and the valve in the conventional braking system by means of which the driver adapts the air pressure in the braking cylinders. When the braking force modulator is inactive, the unit only forms a fully open duct for the air. The unit contains two valves, both operated by spring-biased pistons which in turn are operated by the hydraulic fluid pressure existing in the hydraulic cylinder of the braking force modulator. The one valve is a shut-off valve which at a certain, relatively low hydraulic fluid pressure interrupts the pressurized-air supply to the braking cylinder. The other valve is a release valve which at a certain, considerably higher hydraulic fluid pressure releases air from the braking cylinder to the atmosphere. The way of operation of the unit is as follows: If during braking of the vehicle a wheel is retarded in a way causing the sensor to emit a signal ordering brake release, the braking force modulator comes into action and produces a hydraulic fluid pressure in its hydraulic cylinder. As soon as this pressure amounts to e.g. 4 to 7 bar, the shut-off valve of the unit is closed and continued pressure accumulation in the braking cylinder is stopped. The braking force modulator continues to increase the hydraulic fluid pressure in the hydraulic cylinder permitting the brake release to continue. In most cases the braking force modulator thereafter is able to control the continued braking course, which means that it is able to release the brake in a sufficient degree against the air pressure isolated in the braking cylinder. If the hydraulic pressure increases to a value near the maximum value for which the pump of the braking force modulator is adapted, e.g. 80 bar, the release valve of the unit is opened and releases a part of the air confined in the braking cylinder. In this way the braking force applied by the conventional braking system by normally only a single limited release of air is adapted to a value which during a braking sequence controlled by the braking force modulator can be taken care of by a considerably less powerful electric motor and pump than those required in a device according to Swedish Patent Specification No. SE-B-76 01997-5 (publication number 418 485). It has been found that a motor having a starting power of about 350 W is sufficient and that a braking force modulator according to the present invention only requires a mean power of barely 100 W.

In spite of this very low power requirement it has been possible to force the braking force modulator according to the invention, to perform at a higher working frequency and thereby higher efficiency than any previously known braking force modulator for pressurized-air brakes.

Other basic features and advantages of the invention will appear from the ensuing description, the invention itself and its particular characteristic features appearing from the attached claims.

The invention will be described hereafter by reference to the attached drawings in which

FIGURE 1 is a schematic representation of the braking force modulator according to the invention together with a complete braking system for a wheel with the various parts shown completely or partly in section,

FIGURES 2 and 3 are sections of a piston pump forming part of the system according to Fig. 1,

FIGURE 4 is a section of a pressure relief valve forming part of the piston pump according to Figs. 2 and 3,

FIGURE 5 is a section of a servo valve forming part of the system according to Fig. 1,

FIGURE 6 is a section of a pressure holding valve forming part of the system according to Fig. 1,

FIGURE 7 is a section of a hydraulically operated combined closing and release valve for pressurized air as used in the system according to Fig. 1,

FIGURE 8 is a schematic representation of a lock-preventing device identical with that shown in Fig. 1 apart from the fact that the device is complemented by a device eliminating exaggregated release of the brake,

FIGURE 9 is an amperage-time diagram for solenoid operating circuits, and

FIGURE 10 is a perspective view of a practical embodiment of the invention.

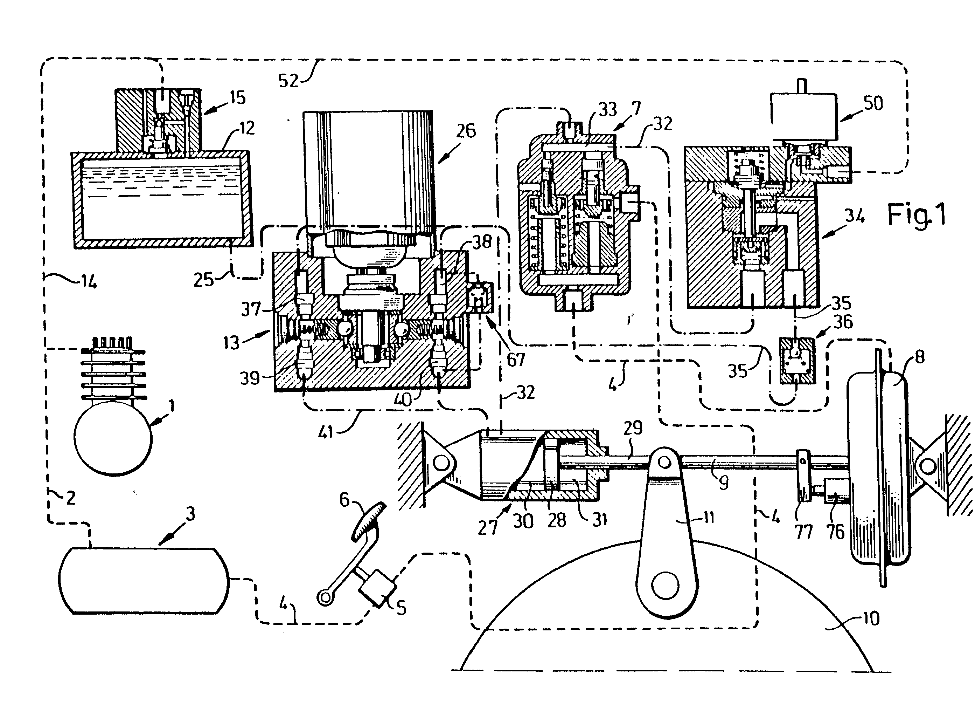

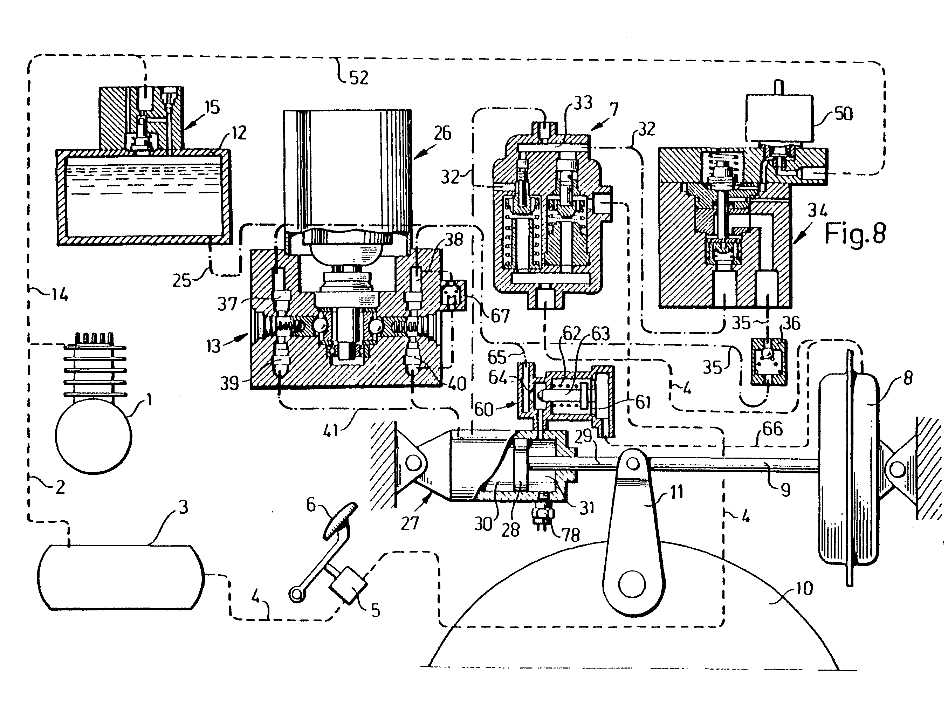

The embodiment of the device according to this invention as shown in Fig. 1 comprises, on the one hand, a conventional pressurized-air system and, on the other hand, a hydraulic system. In Figs. 1 and 8 the pressurized-air conduits are drawn as broken lines and the hydraulic conduits as dot-and-dash lines. The pressurized-air system comprises a compressor 1 which by a conduit 2 is connected to the associated pressure tank 3 for pressurized air used for both the brakes of the vehicle and for operating a servo valve forming part of the braking force modulator, a conduit 4 which via a control valve 5 connected to a brake pedal 6, adapted to be operated by the driver, extends to a control valve 7 and from there to a braking cylinder 8. The braking cylinder 8 is of conventional construction and comprises a membrane (not shown) from which a pressure rod 9 movably extends outwardly through a wall of the cylinder 8 to the conventional brake 10 with the brake lever 11 connected to a wheel. When pressurized air is supplied to the braking cylinder 8, rod 9 accordingly will be moved to the left in Fig. 1 which means that the brake is applied. When pressurized air is released the pressure rod 9 is returned towards or to its starting position with the aid of springs or the like (not shown).

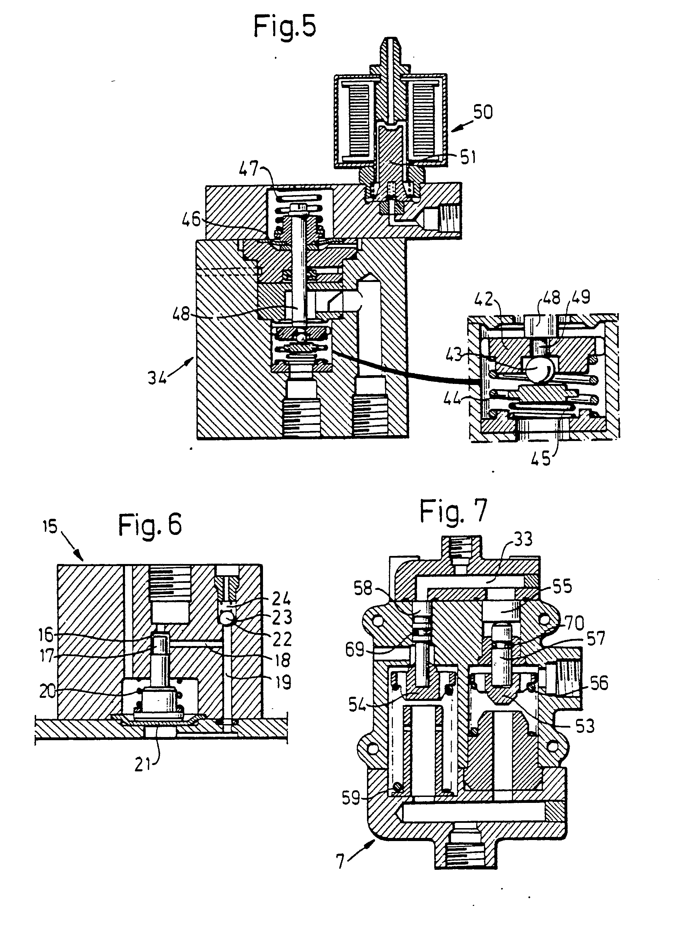

The braking force modulating system of the invention comprises a tank 12 for the hydraulic fluid in which the hydraulic fluid and thereby the entire hydraulic system is under a pressure of between 1 and 3 bar. The application of this pressure has two purposes. On the one hand, the operation of the pump 13—which on the attached drawings is shown as a substantially conventional two-cylinder piston pump the details of which will be explained later—will become more efficient and reliable due to the fact that cavitation at its inlet valves will be avoided and, on the other hand, the applied pressure guarantees the ventilation of the system in a way which also will be described later. This application of pressure is obtained by means of a pressurized-air conduit 14 which by a reducing valve 15 combined with a security valve, a so-called pressure holding valve, discharges into tank 12. In Figs. 1 and 6 the device is shown with the various parts in their positions taken prior to pressure application to the tank 12. When pressurized air is supplied through conduit 14 the pressurized air is passed past the valve seat 16 and the valve cone 17 via ducts 18 and 19 down into tank 12. When the pressure therein has increased to a predetermined value, the bias of spring 20 is overcome by the force exerted by membrane 21 causing valve cone 17 to move upwardly towards the valve seat 16 and the accumulation of pressure in tank 12 to cease. As one can never be sure that an absolutely tight seal is obtained between valve cone 17 and seat 16, the pressure holding device 15 has been provided with a conventional security valve comprising a valve seat 22 integrated into the housing of device 15, a ball valve 23 and a spring 24. The adjustment of this security valve thus finally determines the application of pressure in tank 12. From tank 12 hydraulic conduit 25 extends to pump 13 which is driven by an electric motor 26, and therefrom further to a release cylinder 27 in which a piston 28 provided with a pressure rod 29 is adapted to be shifted. Piston 28 subdivides the interior of cylinder 27 into two chambers 30, 31 one of which, 30, may be pressurized to counteract the braking force brought about by braking cylinder 8. Chamber 31 is ventilated to the atmosphere.

From chamber 30 in the release cylinder 27 a hydraulic conduit 32 extends to a collecting chamber 33 in the control valve 7 and from there to a pneumatically servo-controlled modulator valve 34 and further back to the hydraulic fluid tank 12 through a conduit 35. A check valve 36 is inserted into conduit 35 between the modulator valve 34 and tank 12. Its purpose is to render the system self-air-bleeding, this purpose being achieved in two ways.

If there is no hydraulic fluid in the entire system for example when it has just been mounted on a vehicle and tank 12 is filled with hydraulic fluid, the fluid, under the action of gravity, and provided that the pump is placed below tank 12, will flow downwardly through conduit 25 to the inlet valves 37 and 38 of pump 13, but the pump will not operate when the motor 26 is started due to the fact that air is trapped in the cylinders. Pumps of this type having small stroke volumes and necessarily relatively large dead volumes are not self-air-bleeding. When pressure is applied to tank 12 by means of pressure holding valve 15, the check valve 36 prevents the pressure to reach the modulator valve 34 from tank 12 through conduit 35 and pass further to conduit 32 and control valve 7 to chamber 30 and from there to the outlet valves 39, 40 of pump 13. On the contrary, hydraulic fluid is pressed from tank 12 through the inlet and outlet valves 37, 38, 39, 40 of pump 13 and through conduit 41 into chamber 30 until the pressure determined by pressure holding valve 15 is prevailing in the whole system. Thereby the pump will be efficiently air-bled and in addition also chamber 30, at least in part, depending on the volume of conduit 35, the collecting chamber 33 in the control valve 7 and the space within modulator valve 34. In any case, pump 13 is now ready to pump if the system is activated and the small amount of air that may be trapped in chamber 30 would only cause a certain retardation of the first and possibly one or two additional control cycles, whereafter the entire system is air-bled. This means that pump 13 will be ventilated also provided it is located above tank 12.

However, check valve 36 has another air-bleeding function. Studying the conduit arrangement in connection with tank 12, the inlet and outlet valves 37, 38, 39, 40 of pump 13, check valve 36 and chamber 30, it will be appreciated that a closed circuit is at hand in which cylinder 27 with chamber 30 and piston 28 forms a pump with the inlet and outlet valves 37, 38, 39, 40 of pump 13 as inlet valves, and the check valve 36 as outlet valve. Piston 28 is shifted during every normal braking which means that hydraulic fluid during every braking moves in a circuit which will hold the entire system bled of air.

The conventional pressurized-air braking system shown in Figs. 1 and 8 operates in the following way: When the driver depresses the brake pedal 6 the control valve 5 is opened and pressurized air flows from pressurized-air tank 3 through control valve 7 to braking cylinder 8 via pressurized-air conduit 4. Pressure rod 9 is moved outwardly and turns lever 11 on brake 10 causing the brake to be applied. In a conventional pressurized-air braking system the pressure of the pressurized air amounts to about 7 bar.

A sensor (not shown) senses the state of rotation of the braked wheel. If the braking becomes so powerful that the wheel is retarded to a value exceeding a predetermined value, i.e. if the braking force will be greater than that permitted by the friction against the road surface and if the wheel thus tends to get locked, the sensor emits a signal which, on the one hand, causes the motor 26 of pump 13 to start and, on the other hand, causes the modulator valve 34 to interrupt the hydraulic fluid flow produced by pump 13.

Modulator valve 34 (Fig. 5) comprises a double valve 42, 43 with return springs 44 and 45 respectively which normally are open. They are operated with the aid of a membrane 46 and a balancing spring 47 via a push rod 48 which via a pin 49 extends through valve 42 for operation of valve ball 43. The space underlying membrane 46 is normally open to the atmosphere by solenoid valve 50 comprising a core 51 which at its both ends form the movable part of two seat valves. Upon receipt of a sensor signal ordering the brake to be released, current is supplied to motor 26 and solenoid valve 50 causing core 51 to be lifted and to open the lower one of the valve openings and closing the upper one. Thereby the connection between the membrane chamber and the atmosphere is interrupted and pressurized air is supplied there through conduit 52.

Push rod 48 is then moved in an upward direction as shown in the Figure, causing at first valve 42 to close and immediately thereafter also the ball valve 43. If now motor 26 and thereby pump 13 are started, a brake release is started due to the fact that pump 13 starts accumulating a hydraulic pressure in chamber 30 of the release cylinder 27.

Upon receipt of a sensor order again to apply the brake, current supply to motor 26 is interrupted causing pump 13 to stop. Also current supply to solenoid 50 is interrupted causing core 51 to move again towards its lower position to restore the connection of the membrane chamber with the atmosphere and to interrupt the pressurized-air connection with conduit 52. Membrane 46 and push rod 48 move downwardly under the action of spring 47. Thereby ball valve 43 is opened but the force exerted by spring 47 is not sufficient to open the big valve 42 due to the high hydraulic pressure accumulated during brake release. Thereby the application of the brake is performed in a soft, controlled way which is essential in order to cause the system to operate in a jerkfree way. The speed of application may be adapted by suitable choice of the diameter of the hole in valve 42 and the diameter of pin 49 passing through this hole for operating the ball valve 43.

In order to cause the big valve to open, the hydraulic pressure is required to go down to some few bar which normally never occurs during a braking sequence controlled by the system unless the driver concludes the braking by releasing the brake pedal. Thus, during a braking sequence controlled by the system as a rule only the ball valve 43 will be opened and closed.

It should be noted that the sensor system so far referred to is a simple system only emitting signals ordering the brake to be released and applied respectively. Such a sensor system is described in e.g. Swedish Patents Nos. 77 12342-0, 78 04673-7 and 78 01119-4.

However, sensor systems are available which in addition to the two signals mentioned above also emit signals causing the braking force to be held at a constant level during certain periods.

The braking force modulator according to this invention is able also to receive and obey such orders. This is brought about by operating motor 26 and solenoid valve 50 by mutually independent sensor signals.

The sensor order to hold the braking force at a constant level is obeyed by interrupting current supply to motor 26 whereas solenoid valve 50 is supplied with current.

In the ensuing detailed description of the function of the system, the explanation will however be restricted only to deal with sensor systems emitting the orders to respectively release and apply the brake.

It may also be mentioned that the working frequency of the system and thereby its efficiency may be increased by so constructing the control means respectively closing and interrupting current supply to motor 26 that the motor is short-circuited when current supply is interrupted. After an interruption of the current supply the motor thereby operates as a short-circuited generator producing a very powerful braking moment which quickly brings motor 26 and thereby also pump 13 to a standstill. This technique is well-known in itself and often used in various control systems and other devices. The abrupt stopping of wind screen wipers when the wipers approach rest position after interruption of the current supply is brought about in this way.

If the sensor emits a signal indicating that the wheel tends to be retarded too strongly, valves 42 and 43 of the modulator valve 34 will be closed while at the same time pump 13 starts pumping hydraulic fluid into chamber 30 in release cylinder 27. In this cylinder a pressure is accumulated acting on the piston 28, and when this pressure has become sufficiently high, piston 28 is moved towards braking cylinder 8 and the braking force is reduced. The sensor all the time senses the state of rotation of the braked wheel and depending on this the sensor emits signals which open and close valve 43 and start and disconnect motor 26 and thereby pump 13. It has been found that a suitable pressure of the hydraulic fluid from the pump amounts to about 80 bar even if the pump may be able to produce a higher pressure. It has been found that the motor suitably should be dimensioned for a starting power of 350 W. When the motor has started the power requirement goes down to about half this value and as during a braking sequence controlled by the system the periods of brake release and brake application are approximately equally long, the average power consumption will be of the order of 100 W. This applies to very powerful brakes, e.g. rear brakes on a very heavy lorry. For the front wheels of the same lorry, the power requirement is only about half this value.

The hydraulic fluid pressure in chamber 30 in the release cylinder 27 is transmitted through conduit 32 to the collection chamber 33 in control valve 7 where it acts on two pistons controlling two valves, which in turn control the air pressure in cylinder 8 during a braking sequence controlled by the system comprising the wheel sensor and the braking force modulator. One of these valves is a shut-off valve 53 (compare Fig. 7) which interrupts the supply of pressurized air to braking cylinder 8 through conduit 4 when the pressure in collecting chamber 33 exceeds an adjusted value between 4 and 7 bar. This means that the continued control of the braking force is dominated by the braking force modulator as long as the hydraulic pressure in chamber 33 is above the adjusted value of 4 to 7 bar for the shut-off valve 53.

If the pressure in chamber 30 rises above a higher value, e.g. about 80 bar, which just under the value pump 13 is intended to that produce, a release valve 54 in control valve 7 is adjusted to open to cause pressurized air to be released from braking cylinder 8 through an opening in the housing of control valve 7.

The two valves 53, 54 (Fig. 7) are thus operated by the hydraulic pressure accumulated in the collecting chamber 33, and the pressure at which the shut-off valve 53 is to close is determined by the interrelation between the area on piston 55 and the biasing force of spring 56. The force from piston 55 is transferred to valve 53 by push rod 57. Analogously, the pressure at which the air releasing valve 54 is intended to open, is determined by the interrelation between the area of piston 58 and the bias of spring 59.

It is to be noted that the operation of the two valves 53, 54 to a certain extent also is influenced by the pressures prevailing in pressurized tank 12, the atmospheric pressure and the air pressure prevailing in the valve cavity in control valve 7. As will be described in greater detail later on, the space on the side opposite to the side onto which the hydraulic pressure acts onto pistons 55, 58 is drained into tank 12 in which the pressure is adjusted to between 1 and 3 bar. As far as piston 58 is concerned, it will be appreciated that this plays no part because this pressure is completely balanced and does not exert any force onto piston 58. On the contrary, the force exerted onto valve 53 is influenced by a force corresponding to the force exerted by the hydraulic pressure onto piston 55.

This force is exerted by the pressure in tank 12 onto the surface forming the difference between the cross-sectional areas on piston 55 and push rod 57. Moreover push rod 57 is acted-upon by the air pressure prevailing in control valve 7 in the direction against the force exerted by the hydraulic pressure onto piston 55. It will also be appreciated that when valves 53, 54 are closed, air pressure differentials thereover exert a force tending to hold them closed, whereby certain hysteresis differences are produced in the hydraulic pressure at which the valves are opened and closed.

The influences of various air pressures as described in the preceding paragraph, however, are of minor importance, on the one hand, because the air pressures are low compared to the hydraulic pressures and, on the other hand, because no difficulties are encountered in so balancing the mutual inter-relation between the relevant cross-sectional areas and the springs 56, 59 in such a way that the action of the air pressure forces on the function of control valve 7 will become completely unimportant.

Thus, by the control valve 7 a balancing of the pressure in the hydraulic and pressurized-air systems is obtained so that pump 13 never needs work against the maximum pressure which the pressurized-air system is able to offer, but only needs work against the maximum pressure which control valve 7 is adjusted to permit and which still is sufficient under all conditions to yield maximum braking force without locking of the wheels. As the actual brake release of the anti-lock system is operated with hydraulic fluid, all pressure transmission is performed practically instantaneously so that the system operates at a relative high frequency up to above 7 - 8 Hz due to which the braking force in practice gives an impression of being even and powerful without any tendency towards lateral bias in the steerable wheels.

During a controlled braking sequence a discharge of air normally only occurs in the beginning of the process. All subsequent adaptation of the braking force is performed only by the hydraulic system—at least if the condition of the road is substantially consistent.

If the road condition changes during a braking sequence controlled by the wheel sensor/braking force modulator system, it may however happen that due to suddenly deteriorated road condition another discharge of air occurs and, inversely if the road condition suddenly becomes improved, an increase of the braking force may require supply of additional air from the pressure supply tank of the braking system, which occurs if the hydraulic pressure goes down below the pressure between 4 and 7 bar above which the shut-off valve 53 closes.

Normally a considerable lost-motion occurs during application of a pressurized-air brake which means that the piston rod 9 must move over a rather long distance before the brake shoes come into contact with the brake drum or the brake pads contact the brake disc. Ordinary values for lorry drum brakes are a total stroke length of the piston rod 9 of about 50 mm, of which value 40 mm is lost-motion and only 10 mm constitutes the distance over which the piston rod moves from the moment of the first contact of the brake shoes with the drum to the point of full brake application.

This condition may be to the disadvantage of the efficiency of the system under certain conditions. For example, during a very abrupt brake application under very slippery road conditions it could happen that the wheel is forced down to such a low speed in relation to the speed of the vehicle that it takes a long time until the wheel has recovered so that the sensor order to release the brake will cease. The modulator then may have operated for so long that it has not only completely released the brakes but also forced back the brake far out into the lost-motion range. When the sensor subsequently orders the brakes again to be applied, this lost motion must be taken up before the brakes again start operating. This obviously means a loss of time lowering the working frequency of the system and thereby its efficiency.

In many applications it may be accepted that the modulator releases the brake out into the lost-motion range, but for certain vehicles it is essential that this drawback is eliminated; for this purpose the holding valve 60 is introduced into the system according to Fig. 8, this system in all other respects being identical with that illustrated in Fig. 1. The device comprises a closing valve inserted between chamber 31 in cylinder 27 and conduits 65, 35, 25 to tank 12. The valve is operated via conduit 66 by the same air pressure as that supplied to the braking cylinder 8 during braking. The operating means consists of a membrane 61 and a return spring 62.

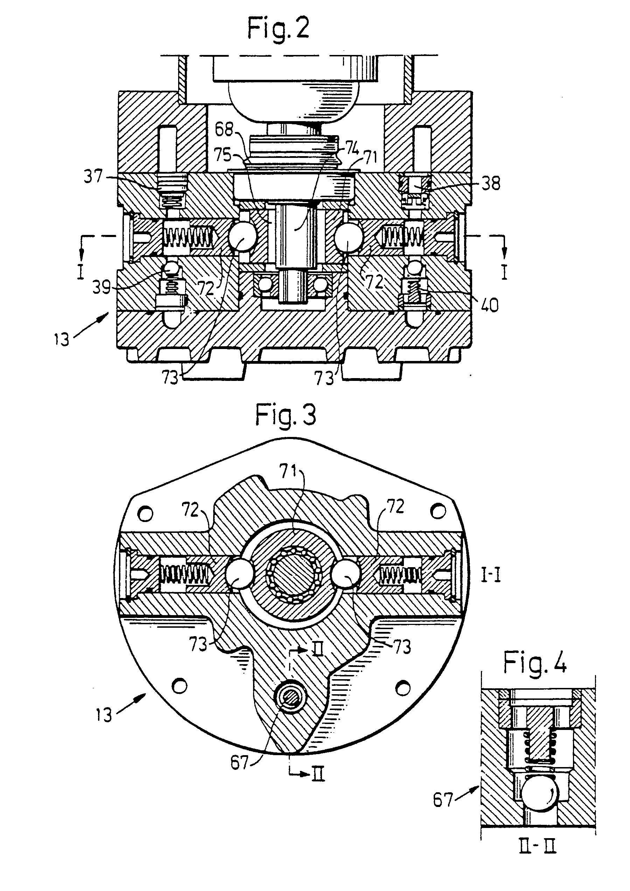

During very extreme conditions, for example. when a vehicle with strongly applied brakes moves on a road in good condition and suddenly passes onto a road section in very bad condition, the speed of rotation of the wheels may quickly go down to almost a standstill. The wheel sensors then emit a signal to the modulators ordering them to release the brake, but due to the low friction between wheel and road surface, the speed of rotation of the wheels, in spite of fully released brakes, will increase so slowly that the wheel sensor signals will become so long-lasting that the modulators not only release the brakes out into the lost-motion range, but up to their mechanical final stop. Considering a wheel with a brake, wheel sensor and modulator it will be found that the hydraulic pressure in the control valve 7 is so high already before the brakes reach their mechanical final stop, that the closing valve 53 (compare Fig. 7) therein is closed and that when the final stop is reached the hydraulic fluid pressure quickly rises to the value limited by the pressure relief valve 67 of pump 13 (compare Figs. 1 and 4) which is far in excess of the value at which the discharge valve 54 in the control valve 7 opens, causing the air pressure in the braking cylinder 8 quickly to go down to atmospheric pressure. The consequence is that the re-application of the brake after the wheel sensor signal has ceased will be very slow. In addition pressurized air is lost.

Even if the risk that the conditions described in the preceding paragraph will occur is not particularly great, measures should be taken to eliminate this risk.

A simple way to obtain this result is to let the electric conduit between the wheel sensor and the modulator pass through a switch which is actuated by the motion in the operating mechanism of the brake. In Fig. 1 a switch 76 is shown mounted on the braking cylinder 8, this switch being actuated by an operating means 77 attached to the push rod 9. In Fig. 1 the brake is shown in completely released condition, the push rod 9 and the brake arm 11 being moved to the right in the Figure against a stationary stop either in the braking cylinder 8 or in the brake 10. In this position switch 76 is open. As soon as, during application of the brake, push rod 9 has moved a short distance to the left in Fig. 1, the contact of the operating means 77 with switch 76 is lost causing the switch to close. If the modulator under the influence of a very long-lasting wheel sensor signal tries to release the brake past the point where the brake shoes lose contact with the brake drum, the force balance in the system, apart from negligible forces from the return spring of the brake and unimportant frictional forces, only consists of the forces from the hydraulic cylinder 27 and the brake cylinder 8. As the system with the design parameters previously indicated in the specification is adapted to be able, at a hydraulic fluid pressure in chamber 30 in hydraulic cylinder 27 amounting to 80 bar, to overcome the force produced by braking cylinder 8 at an air pressure of 2 bar, this means that the air pressure in the braking cylinder 8, when the brake shoes lost contact with the brake drum, by the control valve 7 has been adapted to 2 bar. From this condition the modulator continues to move the brake towards its mechanical final stop which however is never reached because the switch is opened earlier by the operating means 77 interrupting the wheel sensor signal to the modulator causing a brake application phase to start under the action of the air pressure of 2 bar isolated in the braking cylinder 8. When this brake re-application phase has brought-about a movement which is sufficient to cause the operating means 77 again to close switch 76, the modulator starts again. This sequence of alternating start and stop of the modulator is repeated at a relatively high frequency and results in a quickly reciprocating movement of push rod 9, 29, brake arm 11 and details in brake 10 (not shown) until the wheel sensor signal ceases. During all this time the air pressure of 2 bar isolated in braking cylinder 8 is ready to re-apply the brake, as soon as the wheel sensor signal ceases.

When braking is not performed the valve 60 is open and the whole circuit in the embodiment shown is maintained in an oil filled state by gravity-flow all the way from tank 12. The air-bleeding is accelerated by brake movements in a newly mounted system just filled with hydraulic fluid. For each particular brake the air pressure can be found at which the brake shoes start touching the brake drum. The return spring 62 is so chosen in relation to membrane 61 that valve cone 63 seals against seat 64 at this pressure. During an ordinary braking while the lost-motion is going on, hydraulic fluid will be sucked into chamber 31 from tank 12 through valve 60. When the brake shoes reach the brake drum, valve 60 closes the communication between tank 12 and chamber 31. During continued application of the brake the volume of chamber 31 increases. As no additional hydraulic fluid can enter into chamber 31, a very low pressure is created in chamber 31 causing a number of bubbles filled with vapours of light fractions of the hydraulic fluid to form. When the brake thereafter is released, the volume of chamber 31 is again reduced as well as the volume of the bubbles. When the brake shoes just come out of contact with the drum, the air pressure in the braking cylinder 8 and against membrane 61 in valve 60 has gone down to the value at which valve 60 again opens. The braking cylinder 8 pulls pressure rods 9 and 29 to stop position while hydraulic fluid is pressed back to tank 12.

If however during a braking a sensor signal activates the modulator during such a long time that the brakes are fully released and the modulator tries to press the brake shoes out into the lost-motion range, valve 60 will not open because the air pressure in braking cylinder 8 during a braking process controlled by the braking force modulator will not come down to the requird low pressure. The gas bubbles are condensed and the hydraulic fluid volume enclosed in the chamber 31, of which piston 28 constitutes one wall, unconditionally stops continued movement out into the lost-motion range.

In communication with chamber 31 in hydraulic cylinder 27 a switch 78 is provided (see Fig. 8). It is actuated by the hydraulic pressure in chamber 31 and is normally closed but is opened at pressures in excess of the pressure between 1 and 3 bar at which the hydraulic system constantly is pressurized. The switch 78 is inserted into the electric conduit between the wheel sensor and the modulator and its function is analogous to the above described switch 76 apart from the fact that switch 76 permits the modulator to release the brake to a point close to its mechanical final stop whereas switch 78 only permits the modulator to release the brake a short distance outwardly into the lost-motion range.

Valve 60 does not open before the driver has released the brake pedal.

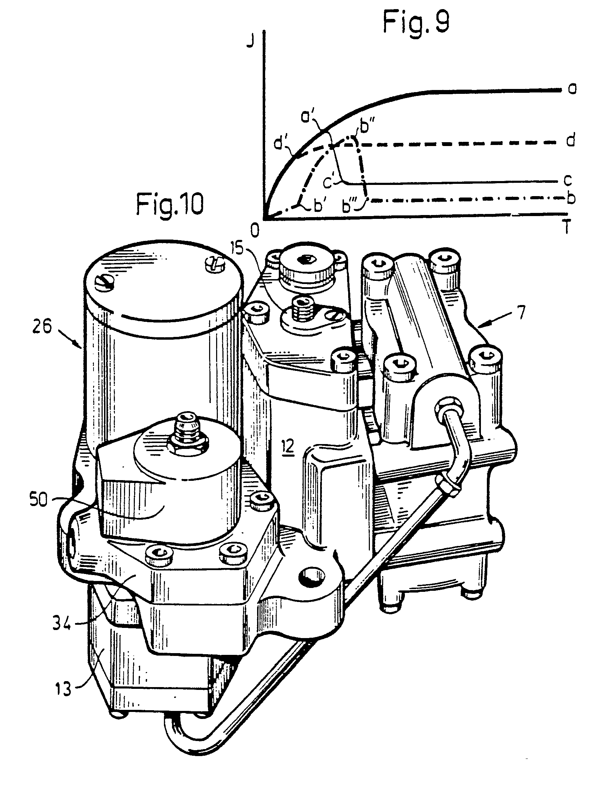

In Fig. 10 there is shown a compact series-produced embodiment of the present invention manufactured of rationally shaped cast details. The unit contains all the elements shown in Figs. 1 and 8, except those forming parts of the pressurized-air braking system itself, i.e. the compressor 1, the pressurized-air supply tank 3, the brake pedal 6, the brake valve 5, the braking cylinder 8 and the brake 10 with the lever 11. The only units characteristic of the invention but not to be found in Fig. 10 are cylinder 27 and valve 60. In Fig. 10 the various parts are identified by the same reference designations as corresponding parts in Figs. 1 to 8 provided that they are not so integrated into the unit according to Fig. 10 that they cannot be identified in this outside view. It should be noted that the greater part of the conduits which in Fig. 1 and 8 are marked by respectively broken lines (pressurized air) and dot-and-dash lines (hydraulic fluid) in the modulator according to Fig. 10 are constituted by moulded or drilled ducts. It is of course possible to integrate all the detail units according to this invention with braking cylinder 8. The embodiment shown in Fig. 10, however, is the most generic embodiment.

To conclude with, some design features will be described which are characteristic of some of the elements forming part of the system and which are of great importance for the efficiency of the system.

Sealing elements such as O-rings, on pistons exposed to high pressures, yield very high frictional losses.

For this reason the pistons in pump 13 (Figs. 2 and 3) have no seals. The pistons are inserted into their cylinders with a very narrow clearance, some hundredths of a millimeter. When pump 13 is in operation a small amount of hydraulic fluid leaks out into the eccentric space. By a drilled duct this space is in communication with tank 12 to which the leaking oil is returned. The eccentric space in the casing of pump 13 is sealed against motor 26 by a very powerful sealing element 68 which with ample margin resists the pressure of between 1 and 3 bar applied to the entire hydraulic system. The loss of volumetric efficiency caused by the leakage, about 10% of the pumping capacity, is considerably lower than that to be caused by sealing elements such as O-rings, on the pistons.

Not either pistons 55 and 58 in control valve 7 (Fig. 7) are provided with any sealing elements to hold back the hydraulic fluid. The small amount of oil leaking past the pistons returns through bores in the casing of valve 7 to tank 12 through corresponding bores therein. This is easily arranged because, as appears from Fig. 10, control valve 7 is directly bolted to tank 12. In contrast, O-rings 69 and 70 respectively are provided on respectively piston 58 and push rod 57.

However, they are not exposed to the pressure of the hydraulic fluid which is of an order of magnitude of 80 bar. O-ring 70 is only exposed to the pressure between 1 and 3 bar with which the entire hydraulic system is charged and the same applies to O-ring 69 except when braking is performed and one side of it is exposed to the above-mentioned pressure of 1 to 3 bar whereas the other side is exposed to atmospheric pressure.

Thereby the large hysteresis influences are avoided which otherwise would have disturbed the function of control valve 7.

The design of pump 13 (Figs. 2 and 3) which fundamentally is a conventional, eccentric-operated piston pump with automatic, continuously spring-biased inlet and outlet valves, is distinguished from conventional pumps of this type in one important respect. In conventional pumps the flat ends of the pistons abut against an eccentric ring, the outer surface of which is completely cylindrical. If the pump only has one cylinder, the relative movement between piston and eccentric is a pure rolling motion. If the pump is provided with more than one piston, a sliding action occurs between the end flats of the pistons and the eccentric causing wear and large frictional losses, on the one hand, in the contact surfaces between the pistons and the eccentric and, on the other hand, between the pistons and the cylinders due to the large lateral or guide forces acting between the pistons and the cylinders.

These drawbacks have been completely overcome by the design used according to the present invention. The end of pistons 72 facing the eccentric ring 71 in Figs. 2, 3 and the outer surface of the eccentric ring are provided with concave, spherical depressions having a slightly greater radius than the radius of balls 73 inserted into these depressions between the pistons and the eccentric. The sliding movement between the piston and the eccentric in this way is replaced by a pure rolling movement, and calculations confirmed by practical tests have shown that an improvement in efficiency of an order of 40% are obtained. This is one of the reasons for the previously reported very low power requirements. As for the rest, the pump is of conventional design. The pistons are oscillated by an eccentric mechanism comprising an eccentric 74 integrated with the shaft of motor 26, a needle bearing 75, the previously mentioned eccentric ring 71 as well as balls 73. Also check valves 37, 38, 39, 40 are of conventional design comprising coil springs, valve cones and valve seats. For the inlet valves 37, 38 flat valve elements have been chosen whereas balls have been chosen for the outlet valves. The pressure relief valve 67 (Figs. 1, 4, 8) of pump 13 is also of conventional design, a seat integrated with the pump housing, a ball forming the valve element and a support device for supporting a spring are mounted in the pump housing.

It is to be noted that there are obviously several other types of pumps that can be adapted to be used in connection with the present invention, such as gear pumps and wing pumps. Experience, however, has shown that piston pumps are less complicated and cheaper than other types of pumps when it is a question of small units for relatively high pressures. It will be appreciated that a piston pump having automatic, spring-biased valves has obvious advantages in connection with the way in which the complete hydraulic system is air-bled as described before. If the spring pressure of the pump valves is not too high it is easy to press oil through a piston pump which is a necessary condition for the air bleeding system chosen and in which the check valve 36 forms an integrated part. In most of the other pump types, the pump must operate as a hydraulic motor in order to enable oil to be pressed through the pump which would require so high pressures that air-bleeding according to the principles adhered to here would be impossible.

It is extremely important that the solenoid valve 50 (Fig. 5) reacts very quickly to the sensor signals both regarding attraction when the current is supplied to the solenoid and as regards release when the current is interrupted. As a rule, a quick attraction does not present any difficulties to attain—it is a question of having sufficiently powerful solenoids with many ampere windings. The difficulty to cause the core 51 to become detached when the current is broken is more pronounced and unfortunately these difficulties will be the more accentuated the more powerful the magnetic flow produced by the solenoids is.

Hereafter three variants of devices offering solutions of this problem will be explained by reference to Fig. 9 showing amperage (I) as a function of time (T). The common feature of the three arrangements is that a very powerful solenoid is used in which a very high amperage would be attained if the chosen net voltage is permitted to act for a sufficiently long time. Such a process is shown by the thick full line (a) in Fig. 9.

One way involves inserting a resistor in series with solenoid valve 50. A transistor is shunted over the connections of this resistor to short-circuit the resistor upon reception of a control signal. This control signal is derived from an induction coil wound on the same coil support as that forming part of solenoid valve 50. When current is supplied to solenoid valve 50, it passes during the first moments through the resistor. This is shown in Fig. 9 by the dot-and-dash line (0) to (b'). Thereby a control current is induced causing the transistor to short-circuit the resistor and the amperage to be built up very quickly as shown in Fig. 9 by the dot-and-dash line (b') to (b''). When the current passing through the solenoid approaches the steady-state value, the time derivative of the amperage is reduced so that the induced control current is weakened to such an extent as to become unable to hold the transistor closed whereby the resistor is cut in again. Thereby the current flow in the induction coil controlling the transistor is reduced causing the transistor again to open and the resistor to be inserted again into the circuit. The current flow through solenoid valve 50 is then strongly reduced according to the dot-and-dash line (b'')

to (b'''), to continue on a constant level. The strength of the magnetic field produced by the solenoid quickly fades out to a level which is just sufficient to hold core 51 in the attracted position. It will be appreciated that core 51 under the action of the return spring very quickly returns to its starting position when the current supply to the solenoid is interrupted. The great advantage of this arrangement in comparison with the two arrangements to be described hereafter resides in the fact that it performs a so-called sequence control in such a way that the restriction of the amperage does not take place before core 51 actually has been pulled over its entire stroke-length.

Similar results may be obtained by electrical "solid-state" circuits controlled by commercially available electronic "chips".

"Chips" are available which permit the current to pass without hindrance when the current is supplied during a short, predetermined period of time. The evolution of the current follows the full line from (0) to (a'). After expiration of this period of time, in this connection some milliseconds, a so-called "chopper" included in the "chip" chops the current to form a pulsating direct current the mean voltage of which is determined by the interrelation between the periods in which the current is respectively broken and closed. The current then goes down along the fine full line from (a') to (c') whereafter the amperage remains on a constant level.

On certain fields of use of the modulator, a "chip" forming a current limiter may be sufficient. When current supply to the solenoid is started the current may pass unhampered until it approaches (d') a predetermined amperage, whereafter the current is held constant at this amperage. The continued process is illustrated by the broken line (d).

It will appear from the preceding explanation that this invention has a very wide applicability, particularly in connection with large vehicles. The drawbacks observed in previously known systems are completely eliminated by this invention as it has been possible strongly to reduce the power requirement of the pumping motor while at the same time the control frequency has been increased substantially in relation to previously applied pressurized-air discharging systems and the discharged pressurized air volume has been reduced so drastically that there never will be any risk that the pressurized air will be insufficient for repeated and extended use of the lock-preventing system. The designs described here are simple as to their composition and it will therefore be possible to manufacture them at a relatively low price. There is a pronounced need of reliable lock-preventing devices for vehicle brakes of pressurized-air type and this need may be met by the present invention.

The experts in the field to which the invention belongs will appreciate that the invention may be varied and modified within the frame of the attached claims without deviation from the basic idea of the invention such as it is expressed in the attached claims.

## Claims

1. Braking force modulator forming part of an anti-lock braking system for vehicles comprising a pressurized-air circuit for the braking function, a hydraulic circuit for the anti-lock function and one or more sensors, sensing the state of rotation of the vehicle wheels and emitting signals depending thereon, this pressurized-air circuit basically being of conventional design and comprising a pressurized-air source (1, 3), a braking cylinder (8) for each wheel braking device, a control valve (5) for controlling the supply of pressurized air to the braking cylinders (8) when the brakes are activated and pressurized-air conduits extending therebetween, said hydraulic circuit comprising at least one hydraulic tank (12), at least one pressure producer (13, 26) applying pressure to the hydraulic fluid, a counter-pressure cylinder (27) for each wheel braking device which when exposed to pressure from the hydraulic fluid counteracts the braking force produced by the relevant braking cylinder (8), at least one modulator valve (34) acted-upon by the sensor signals and adapted, depending on these sensor signals, to modulate the pressure in the counter-pressure cylinder or cylinders (27), as well as hydraulic conduits extending therebetween, characterized by a shut-off valve (53) which is inserted into the pressurized-air conduit (4) between the control valve (5) and one or more braking cylinders (8) and shutting-off the supply of pressurized air to the braking cylinder or cylinders (8) subsequent to a sensor signal ordering release of the brake, and a release valve (54) inserted into the pressurized-air conduit (4) between the closing valve (53) and the braking cylinder or cylinders (8) for discharge of pressurized air therefrom if the capability of the pressure producer (13, 26) to further raise pressure in the counter-pressure cylinder to continue with the brake release is exhausted.

2. Braking force modulator as claimed in Claim 1, characterized in that the shut-off and discharge valves (53, 54) are inserted between the pressure producer or producers (13, 26) and the modulator valve or valves (34) to be actuated by the modulated hydraulic pressure and that the modulated hydraulic pressure determines when the shut-off and discharge valves respectively close and open.

3. Braking force modulator as claimed in Claims 1 and 2, characterized in that at least one shut-off valve (53) and at least one discharge valve (54) are enclosed in the same housing to form a control valve (7).

4. Braking force modulator as claimed in Claim 3, characterized in that the shut-off valve (53) and the discharge valve (54) each comprise a piston (55, 58) shiftable in its own bore and actuated by the modulated hydraulic pressure.

5. Braking force modulator as claimed in Claim 1, characterized in that each pressure producer (13, 26) comprises a pump (13) and a drive motor (26) and that the motor (26) is short-circuited when the wheel sensor interrupts current supply to the motor.

6. Braking force modulator as claimed in any of the preceding Claims, characterized in that a switch (76) is provided in the electric conduit between wheel sensor and the co-operating modulator valve (34), this switch being operated from the control mechanism (8, 9, 11) of the brake (10) and that this switch (76) is open when the brake is in the non-activated position.

7. Braking force modulator as claimed in any of the preceding Claims, characterized in that the modulator valve (34) is solenoid-operated, that the winding of the solenoid in the solenoid valve (50) is dimensioned for a very high amperage in the steady-state condition when the network voltage chosen is applied and that devices are switched-in in series with the solenoid preventing the amperage from reaching or at least not maintaining the steady-state condition value.

8. Braking force modulator as claimed in Claim 7, characterized in that the device for limiting the amperage in the winding of the solenoid in the solenoid valve (50) comprises an ohmic resistor in series with the solenoid adapted to be short-circuited by a transistor shunted over the resistor, said transistor receiving its control current from a special induction loop wound in connection with the solenoid.

9. Braking force modulator as claimed in Claim 7, characterized in that the device for limiting the amperage in the winding of the solenoid in the solenoid valve (50) comprises a semi-conductor element connected in series with the solenoid and adapted, after a certain, pre-programmed period of time, to cause a so-called "chopper" inserted into the semi-conductor element to chop the current into a high-frequency, pulsating direct current the mean voltage of which is adapted so as to limit the amperage through the solenoid to a suitable value.

10. Braking force modulator as claimed in Claim 7, characterized in that the device for limiting the amperage in the winding of the solenoid in the solenoid valve (50) comprises a semi-conductor element connected in series with the solenoid and adapted, after a certain pre-programmed amperage has been achieved, to bar the amperage at this level.

11. Braking force modulator as claimed in Claim 1, comprising a counter-pressure cylinder (27) connected to each wheel braking device, said counter-pressure cylinder (27) comprising two chambers (30, 31), one on either side of a movable piston (28), which in turn by means of a rod (29) is connected to the relevant wheel braking device for counteracting the braking effect thereof during certain braking conditions by placing the one chamber (30) in the counter-pressure cylinder (27) under a modulated pressure, characterized in that a holding valve (60) is connected, on the one hand, to the other chamber (31) of the counter-pressure cylinder (27) and, on the other hand, to the pressure medium supply (12) for the braking force modulator, and that the holding valve (60) is adapted, at a predetermined pressure in the braking cylinder (8), to separate the other chamber (31) from the pressure medium supply (12) to lock during brake release the movable piston (28) and thereby the brake arm (11) at or close to the position taken at the predetermined pressure in the braking cylinder (8).

12. Braking force modulator as claimed in Claim 11, characterized in that a switch (78) is provided to be actuated by the pressure in the second chamber (31) of the counter-pressure cylinder (27), and that this switch (78) is inserted into the electric conduit between the wheel sensor and the corresponding modulator valve (34) and that it is closed at the hydraulic fluid pressure normally held by the system and is broken at excessive pressures therein.

13. Braking force modulator as claimed in any of the preceding Claims, in which the member producing the hydraulic fluid pressure is a multicylinder piston pump (13) in which the pistons are driven by an oscillating common eccentric (74), characterized in that the ends of the pistons (72) facing the eccentric ring (71) are provided with spherical depressions, that corresponding spherical depressions are provided in the periphery of the eccentric ring (67), and that a ball (73) having a radius less then the radius of the spherical depressions is placed between each piston and the eccentric ring (67) in the spherical depressions.

14. Braking force modulator as claimed in any of the preceding Claims, characterized in that the hydraulic fluid tank (12) is under a pressure controlled by a pressure holding valve (15) in order to avoid cavitation at the inlet valve (37, 38) of the pump (13) and to press hydraulic fluid from there through the pump and out into the hydraulic circuit, that a check valve (36) is inserted into the return conduit (35) to the hydraulic fluid tank (12), permitting flow to the hydraulic fluid tank (12), that the piston (28) in the counter-pressure cylinder (27) by its reciprocating movement sucks hydraulic fluid from tank (12) through the hydraulic fluid pressure producer and into the counter-pressure cylinder and pumps this fluid through the system back to the tank (12) whereby the entire hydraulic circuit is automatically bled of air.

**Patentansprüche**

1. Bremskraftmodulator eines Antiblockierbremssystems für Fahrzeuge, umfassend
— einen Druckluftkreis für die Bremsfunktion,
— einen Hydraulikkreis für die Antiblockierfunktion und
— einen oder mehrere Sensoren, welche den Rotationszustand der Fahrzeugräder überwachen und in Abhängigkeit vom Rotationszustand der Fahrzeugräder Signale aussenden,
wobei der Druckluftkreis einen im Grunde konventionellen Aufbau hat mit
— einer Druckluftquelle (1, 3),

— einem Bremszylinder (8) für jede Radbremsvorrichtung,
— einem Steuerventil (5) zur Steuerung der Druckluftzufuhr zu den Bremszylindern (8) wenn die Bremsen aktiviert sind und
— mit Druckluftleitungen zwischen Druckluftquelle (1, 3), Bremszylindern (8) und Steuerventil (5),
wobei ferner der Hydraulikkreis
— wenigstens einen Hydrauliktank (12),
— wenigstens einen Druckerzeuger (13, 26) zur Ausübung von Druck auf das hydraulische Fluid,
— einen Gegendruckzylinder (27) für jede Radbremsvorrichtung, welcher, wenn er einem Druck durch das hydraulische Fluid ausgesetzt ist, der von dem relevanten Bremszylinder (8) erzeugten Bremskraft entgegenwirkt,
— wenigstens ein von den Sensorsignalen aktiviertes Modulatorventil (34) zum Modulieren des Druckes in dem Gegendruckzylinder bzw. den Gegendruckzylindern (27) in Abhängigkeit von den Sensorsignalen und
— Hydraulikleitungen zwischen Hydrauliktank (12), Druckerzeuger (13, 26), Gegendruckzylinder bzw. Gegenduckzylindern (27) und Modulatorventil (34)
umfaßt, gekennzeichnet durch
— ein in der Druckluftleitung (4) zwischen Steuerventil (5) und einem oder mehreren Bremszylindern (8) eingesetztes Absperrventil (53), welches auf ein ein Lösen der Bremsen anweisendes Sensorsignal hin die Druckluftzufuhr zu dem Bremszylinder bzw. den Bremszylindern (8) sperrt, und
— ein in der Druckluftleitung (4) zwischen dem Absperrventil (53) und dem Bremszylinder bzw. den Bremszylindern (8) eingesetztes Ablaßventil (54) zum Ablassen von Druckluft aus dem Bremszylinder (8) wenn die Fähigkeit des Druckerzeugers (13, 26) zur Erhöhnug des Druckes in dem Gegendruckzylinder (27) und damit zur Fortsetzung eines Bremslösevorgangs ausgeschöpft ist.

2. Bremskraftmodulator nach Anspruch 1, dadurch gekennzeichnet, daß das Absperrventil (53) und das Ablaßventil (54) zwischen dem Druckerzeuger bzw. den Druckerzeugern (13, 26) und dem Modulatorventil bzw. den Modulatorventilen (34) geschaltet sind, um durch den modulierten hydraulischen Druck gesteuert zu werden, und daß das Schließen bzw. Öffnen des Absperrventils bzw. Ablaßventils durch den modulierten hydraulischen Druck bestimmt ist.

3. Bremskraftmodulator nach Anspruch 1 und 2, dadurch gekennzeichnet, daß wenigstens ein Absperrventil (53) und wenigstens ein Ablaßventil (54) zur Bildung eines Steuerventils (7) in ein und demselben Gehäuse eingeschlossen sind.

4. Bremskraftmodulator nach Anspruch 3, dadurch gekennzeichnet, daß das Absperrventil (53) und das Ablaßventil (54) jeweils einen in einer jeweils eigenen Bohrung verschiebbaren und durch den hydraulischen Druck betätigten Kolben (55, 58) umfaßt.

5. Bremskraftmodulator nach Anspruch 1, dadurch gekennzeichnet, daß jeder Druckerzeuger (13, 26) eine Pumpe (13) und einen Antriebsmotor (26) umfaßt, und daß der Motor (26) kurzgeschlossen ist, wenn der Radsensor die Stromzufuhr zum Motor unterbricht.

6. Bremskraftmodulator nach einem der vorhergehenden Ansprüche, dadurch gekennzeichnet, daß ein von einem Steuermechanismus (8, 9, 11) der Bremse (10) betätigter Schalter (76) in der elektrischen Leitung zwischen dem Radsensor und dem damit zusammenwirkenden Modulatorventil (34) vorgesehen ist, und daß dieser Schalter (76) offen ist, wenn die Bremse im nichtbetätigten Zustand ist.

7. Bremskraftmodulator nach einem der vorhergehenden Ansprüche, dadurch gekennzeichnet, daß das Modulatorventil (34) ein Magnetventil (50) umfaßt und magnetisch betätigbar ist, daß die Wicklung des Solenoids in dem Magnetventil (50) für eine sehr hohe Stromstärke im stationären Zustand des Solenoidstromes bei der gewählten angelegten Netzwerkspannung dimensioniert ist, und daß eine in Serie mit dem Solenoid geschaltete Einrichtung zur Strombegrenzung verhindert, daß die Stromstärke den Wert des stationären Zustandes erreicht oder zumindest verhindert, daß die Stromstärke den Wert des stationären Zustandes aufrechterhält.

8. Bremskraftmodulator nach Anspruch 7, dadurch gekennzeichnet, daß die Einrichtung zur Begrenzung der Stromstärke in der Wicklung des Solenoids des Magnetventils (50) einen in Serie mit dem Solenoid geschalteten Ohm'schen Widerstand umfaßt, der durch einen im Nebenschluß zu dem Widerstand geschalteten Transistor kurzschließbar ist, wobei der Transistor seinen Steuerstrom von einer gesonderten Induktionsschleife erhält, die so gewickelt ist, daß sie mit dem Solenoid in Verbindung steht.

9. Bremskraftmodulator nach Anspruch 7, dadurch gekennzeichnet, daß die Einrichtung zur Begrenzung der Stromstärke in der Wicklung des Solenoids des Magnetventils (50) ein in Serie mit dem Solenoid geschaltetes Halbleiterelement umfaßt, welches nach einer vorbestimmten Zeitperiode einen in dem Halbleiterelement befindlichen sogenannten "Chopper" veranlaßt, den Strom in einen hochfrequenten, pulsierenden Gleichstrom zu choppen, dessen mittlere Spannung derart abgestimmt ist, daß die Stromstärke durch das Solenoid auf einen ausreichenden Wert begrenzt wird.

10. Bremskraftmodulator nach Anspruch 7, dadurch gekennzeichnet, daß die Einrichtung zur Begrenzung der Stromstärke in der Wicklung des Solenoids des Magnetventil (50) ein in Serie mit dem Solenoid geschaltetes Halbleiterelement umfaßt, welches nach Erreichen eines vorbestimmten Stromstärkewertes die Stromstärke auf diesen Wert begrenzt.

11. Bremskraftmodulator nach Anspruch 1, mit einem an jeder Radbremsvorrichtung angeschlossenen Gegendruckzylinder (27) mit einer ersten Kammer (30) auf einer Seite eines beweglichen Kolbens (28) und einer zweiten Kammer (31) auf der der ersten Kammer gegenüberliegenden Seite des Kolbens (28), wobei der Kolben über eine Stange (29) an die relevante Bremsvorrichtung angeschlossen ist, um deren Bremseffekt während bestimmter Bremsbedingungen entgegenzuwirken, indem die erste Kammer (30) in dem Gegendruckzylinder (27) einem modulierten Druck ausgesetzt wird, dadurch gekennzeichnet, daß ein Halteventil (60) einerseits an die zweite Kammer (31) des Gegendruckzylinders (27) und andererseits an die Quelle (12) des Druckmediums für den Bremskraftmodulator angeschlossen ist und daß das Halteventil (60) bei einem vorbestimmten Druck in dem Bremszylinder (8) die zweite Kammer (31) von der Quelle des Druckmediums separiert, um während eines Bremslösevorgangs den verschiebbaren Kolben (28) und damit einen Bremsarm (11) in oder nahe der bei dem vorbestimmten Druck in dem Bremszylinder (8) eingenommenen Stellung festzuhalten.

12. Bremskraftmodulator nach Anspruch 11, dadurch gekennzeichnet, daß ein durch den Druck in der zweiten Kammer (31) des Gegendruckzylinders (27) gesteuerter Schalter (78) in der elektrischen Leitung zwischen dem Radsensor und dem damit zusammenwirkenden Modulatorventil (34) eingesetzt ist, und daß der Schalter (78) bei dem normalerweise von dem hydraulischen System gehaltenen Druck des hydraulischen Fluids geschlossen ist und bei übermäßigen Drucken unterbrochen ist.

13. Bremskraftmodulator nach einem der vorhergehenden Ansprüche, mit einer Multizylinderkolbenpumpe (13) zur Erzeugung des hydraulischen Fluiddruckes, deren Kolben durch einen gemeinsamen oszillierenden Exzenter (74) angetrieben werden, dadurch gekennzeichnet, daß die Enden der Kolben (72) einem exzentrischen Ring (71) gegenüberliegen und mit sphärischen Vertiefungen versehen sind, daß entsprechende sphärische Vertiefungen im Umfang des exzentrischen Ringes vorgesehen sind, und daß in den sphärischen Vertiefungen zwischen jedem Kolben und dem exzentrischen Ring eine Kugel (73) eingesetzt ist, deren Radius kleiner ist als der Radius der sphärischen Vertiefungen.

14. Bremskraftmodulator nach einem der vorhergehenden Ansprüche, dadurch gekennzeichnet, daß der Tank (12) für das hydraulische Fluid unter einem von einem Druckhalteventil (15) kontrollierten Druck steht, um Kavitation an dem Einlaßventil (37, 38) der Pumpe (13) zu vermeiden und um hydraulisches Fluid vom Tank durch die Pumpe hindurch in den hydraulischen Kreis zu pressen, daß ein eine Strömung zum Tank (12) ermöglichendes Sperrventil (engl.: check valve) (36) in einer Rückführungsleitung (35) zum Tank (12) des hydraulischen Fluids eingesetzt ist, daß der Kolben (28) in dem Gegendruckzylinder (27) durch seine Hin- und Herbewegung hydraulisches Fluid vom Tank (12) durch den Druckerzeuger für das hydraulische Fluid hindurch in den Gegendruckzylinder saugt und dieses Fluid durch das System hindurch zum Tank (12) zurückpumpt, wodurch der gesamte Hydraulikkreis automatisch entlüftet wird.

**Revendications**

1. Modulateur de force de freinage faisant partie d'un système de freinage antiblocage pour véhicules, comprenant un circuit d'air sous pression pour la fonction de freinage, un circuit hydraulique pour la fonction antiblocage et un ou plusieurs capteurs, détectant l'état de rotation des roues du véhicule et émettant des signaux en fonction de cet état, ce circuit d'air sous pression étant dans son principe de conception classique et comprenant une source d'air sous pression (1, 3), un cylindre de frein (8) pour chaque dispositif de freinage de roue, une soupape de régulation (5) pour la commande d'alimentation d'air sous pression à destination des cylindres de frein (8) lorsque les freins sont actionnés, et des conduites d'air sous pression s'étendant entre ceux-ci, ce circuit hydraulique comprenant au moins un réservoir hydraulique (12), au moins un générateur de pression (13, 26) appliquant la pression au fluide hydraulique, un cylindre de contre-pression (27) pour chaque dispositif de freinage de roue, lequel, lorsqu'il est soumis à la pression du fluide hydraulique, contre-carre la force de freinage produite par le cylindre de frein correspondant (8), au moins une soupape de modulateur (34) actionnée par les signaux du capteur et apte, en fonction de ces signaux de capteur, à moduler la pression dans le ou les cylindres de contre-pression (27), ainsi que des conduites hydrauliques s'étendant entre ceux-ci, caractérisé par une soupape d'arrêt (53) qui est insérée dans la conduite d'air sous pression (4) entre la soupape de régulation (5) et un ou plusieurs cylindres de frein (8) et bloque l'alimentation d'air sous pression destinée au cylindre ou aux cylindres de frein (8) à la suite d'un signal du capteur commandant le desserrage du frein, et une soupape de desserrage (54) insérée dans la conduite d'air sous pression (4) entre la soupape d'arrêt (53) et le cylindre ou les cylindres de frein (8) pour l'évacuation de l'air sous pression à partir de ceux-ci si le générateur de pression (13, 26) n'est plus en mesure d'augmenter davantage la pression dans le cylindre de contre-pression pour continuer à desserrer le frein.

2. Modulateur de force de freinage selon la revendication 1, caractérisé en ce que les soupapes d'arrêt et d'évacuation (53, 54) sont insérées entre le ou les générateurs de pression (13, 26) et la vanne ou les vannes (34) du modulateur pour être actionnées par la pression hydraulique modulée et en ce que la pression hydraulique modulée détermine le moment où les soupapes d'arrêt et d'évacuation se ferment et s'ouvrent respectivement.

3. Modulateur de force de freinage selon les revendications 1 et 2, caractérisé en ce qu'au moins une soupape d'arrêt (53) et au moins une soupape d'évacuation (54) sont renfermées dans le même logement pour former une soupape de commande (7).

4. Modulateur de force de freinage selon la revendication 3, caractérisé en ce que la soupape d'arrêt (53) et la soupape d'évacuation (54) comprennent chacune un piston (55, 58) pouvant être déplacé dans son propre alésage et actionné par la pression hydraulique modulée.

5. Modulateur de force de freinage selon la revendication 1, caractérisé en ce que chaque générateur de pression (13, 26) comprend une pompe (13) et un moteur d'entraînement (26) et en ce que le moteur (26) est mis en court-circuit lorsque le capteur d'état de rotation des roues interrompt l'alimentation en courant vers le moteur.

6. Modulateur de force de freinage selon l'une quelconque des revendications précédentes, caractérisé en ce qu'un commutateur (76) est prévu dans la conduite électrique entre le capteur d'état de rotation des roues et la vanne du modulateur coopérant (34), ce commutateur étant actionné à partir du mécanisme de commande (8, 9, 11) du frein (10) et en ce que ce commutateur (76) est ouvert lorsque le frein se trouve dans la position non actionnée.

7. Modulateur de force de freinage selon l'une quelconque des revendications précédentes, caractérisé en ce que la vanne du modulateur (34) est actionnée par un solénoïde, en ce que l'enroulement du solénoïde dans la vanne électromagnétique (50) est dimensionné pour un ampérage très élevé en régime permanent lorsque la tension de réseau choisie est appliquée et en ce que des dispositifs sont mis sous tension en série avec le solénoide empêchant l'ampérage d'atteindre ou au moins de ne pas maintenir la valeur du régime permanent.

8. Modulateur de force de freinage selon la revendication 7, caractérisé en ce que le dispositif destiné à limiter l'ampérage dans l'enroulement du solénoïde dans la vanne électromagnétique (50) comprend une résistance ohmique montée en série avec le solénoïde apte à être mise en court-circuit par un transistor shunté sur la résistance, ce transistor recevant son courant de commande à partir d'une boucle d'induction spéciale enroulée en liaison avec le solénoïde.

9. Modulateur de force de freinage selon la revendication 7, caractérisé en ce que le dispositif destiné à limiter l'ampérage dans l'enroulement du solénoïde dans la vanne électromagnétique (50) comprend un élément à semi-conducteurs monté en série avec le solénoïde et apte, après une certaine durée pré-programmée, à faire en sorte qu'un élément appelé "écrêteur" inséré entre l'élément à semi-conducteurs écrête le courant en un courant continu pulsé, à fréquence élevée, dont la tension moyenne est apte à limiter l'ampérage à travers le solénoide à une valeur appropriée.

10. Modulateur de force de freinage selon la revendication 7, caractérisé en ce que le dispositif destiné à limiter l'ampérage dans l'enroulement du solénoïde dans la vanne électromagnétique (50) comprend un élément à semi-conducteurs relié en série avec le solénoïde et apte, après l'obtention d'un certain ampérage préprogrammé, à bloquer l'ampérage à ce niveau.

11. Modulateur de force de freinage selon la revendication 1, comprenant un cylindre de contre-pression (27) relié à chaque dispositif de freinage de roue, ce cylindre de contre-pression (27) comprenant deux chambres (30, 31), une de chaque côté d'un piston mobile (28), lequel à son tour, au moyen d'une tige (29), est relié au dispositif de freinage de roue correspondant pour s'opposer à l'effet de freinage de celui-ci lors de certaines conditions de freinage en plaçant une chambre (30) dans le cylindre à contre-pression (27) sous pression modulée, caractérisé en ce qu'une soupape de retenue (60) est reliée, d'une part, à l'autre chambre (31) du cylindre de contre-pression (27) et, d'autre part, à l'alimentation du fluide de pression (12) pour le modulateur de la force de freinage, et en ce que la soupape de retenue (60) est apte, à une pression prédéterminée dans le cylindre de frein (8), à séparer l'autre chambre (31) de l'alimentation du fluide de pression (12) pour bloquer lors du desserrage du frein le piston mobile (28) et ainsi le bras de freinage (11) sur ou à proximité de la position prise à la pression prédéterminée dans le cylindre de frein (8).

12. Modulateur de force de freinage selon la revendication 11, caractérisé en ce qu'un commutateur (78) est prévu pour être actionné par la pression dans la seconde chambre (31) du cylindre de contre-pression (27) et en ce que ce commutateur (78) est inséré dans la conduite électrique entre le capteur de roue et la vanne du modulateur correspondant (34) et en ce qu'il est fermé à la pression de fluide hydraulique normalement maintenue par le système et en ce qu'il est ouvert à des pression excessives.

13. Modulateur de force de freinage selon l'une quelconque des revendications précédentes, dans lequel l'élément produisant la pression de fluide hydraulique est une pompe à piston poly-cylindrique (13) dans laquelle les pistons sont actionnés par un excentrique commun oscillant (74), caractérisé en ce que les extrémités des pistons (72) faisant face à l'anneau excentrique (71) sont munies de dépressions sphériques et en ce que des dépressions sphériques correspondantes sont prévues dans la périphérie de l'anneau excentrique (67) et en ce qu'une bille (73) ayant un rayon inférieur au rayon des dépressions sphériques est placée entre chaque piston et l'anneau excentrique (67) dans les dépressions sphériques.

14. Modulateur de force de freinage selon l'une quelconque des revendications précédentes, caractérisé en ce que le réservoir de fluide hydraulique (12) est sous une pression commandée par une soupape de maintien de pression (15) afin d'éviter la cavitation au niveau de la soupape d'admission (37, 38) de la pompe (13) et pour comprimer le fluide hydraulique à partir de ce point, en passant par la pompe et hors de la pompe jusque dans le circuit hydraulique, en ce qu'une soupape de non-retour (36) est insérée dans la conduite de retour (35) à destination du réservoir de fluide hydraulique (12) permettant l'écoulement à destination du réservoir de fluide hydraulique (12), en ce que le piston (28) dans le cylindre de contre-pression (27) par son mouvement de va-et-vient aspire le fluide hydraulique à partir du réservoir (12) via le générateur de pression de fluide hydraulique et jusque dans le cylindre de contre-pression et recycle ce fluide via le système de nouveau vers le réservoir (12), la totalité du circuit hydraulique étant ainsi automatiquement purgée d'air.

Fig.1

## Fig. 2

## Fig. 3

## Fig. 4

## Fig.5

## Fig. 6

## Fig. 7

Fig.8

EP 0 140 862 B1

## Fig. 9

## Fig.10